# FASCICULE DE BREVET EUROPEEN

(11) **EP 3 201 438 B1**
(45) Date de publication et mention de la délivrance du brevet: **28.07.2021**
(21) Numéro de dépôt: 15778994.2
(22) Date de dépôt: 28.09.2015
(51) Int. Cl.: F01D 5/30, F01D 5/32, F01D 11/00

(54) **AUBE MOBILE DE TURBOMACHINE, COMPRENANT UN ERGOT ENGAGEANT UNE ENTAILLE DE BLOCAGE D'UN DISQUE DE ROTOR**
LAUFSCHAUFEL EINER TURBOMASCHINE MIT EINEM FLANSCH, DER AN EINER SPERRKERBE IN DER ROTORSCHEIBE ANLIEGT
ROTOR BLADE OF A TURBOMACHINE COMPRISING A FLANGE WHICH ABUTS A BLOCKING NOTCH OF A ROTOR DISC

(30) Priorité: 30.09.2014 FR 1459278
(43) Date de publication de la demande: 09.08.2017
(73) Titulaire: SAFRAN AIRCRAFT ENGINES, 75015 Paris (FR)
(72) Inventeur: DESFORGES, Jean-Baptiste Vincent, 77550 Moissy Cramayel Cedex (FR); QUELVEN, Damien Bernard, 77550 Moissy Cramayel Cedex (FR); JUDET, Maurice Guy, 77550 Moissy Cramayel Cedex (FR); TANG, Ba-Phuc, 77550 Moissy Cramayel Cedex (FR)
(74) Mandataire: Brevalex
(86) Numéro de dépôt international: PCT/FR2015/052573
(87) Numéro de publication internationale: WO 2016/051054

(56) Documents cités:
- EP-A2- 1 219 782
- EP-A2- 2 373 872
- WO-A1-2009/019126
- US-A- 3 047 268

## Description

### DOMAINE TECHNIQUE

L'invention se rapporte au domaine technique général des turbomachines d'aéronef telles que les turboréacteurs et les turbopropulseurs. Plus précisément, l'invention concerne des aubes mobiles de turbomachine et des disques de rotor.

### ÉTAT DE LA TECHNIQUE ANTÉRIEURE

Les aubes mobiles de turbomachine sont insérées dans des disques de rotor, de sorte à former des roues de rotor. Ces roues de rotor font partie de compresseur pour turbomachine ou bien de turbine pour turbomachine.

De manière connue, les dents du disque de rotor présentent des bossages sur leur sommet. Ces bossages coopèrent avec des cavités situées sous les plateformes des aubes, de façon à ce que les bossages soient logés dans les cavités.

La coopération mécanique de ces bossages et de ces cavités empêche le montage des aubes mobiles relativement au disque avec l'orientation inverse de l'orientation souhaitable en matière aérodynamique.

Par ailleurs, il existe des roues de rotor dans lesquelles des aubes mobiles sont retenues axialement relativement au disque, d'une part par un ergot en saillie depuis le disque et d'autre part par un flasque.

Dans les deux solutions présentées, la distance radiale entre le point le plus haut de la dent du disque et le point le plus haut de la face interne de la plateforme, que l'on définit comme étant la hauteur d'échasse, lors du fonctionnement de la turbomachine, est alors relativement importante. Il en résulte des fuites importantes, une masse élevée de l'aube et par répercussion du disque portant l'aube, ainsi que des contraintes mécaniques accentuées dans la dent du disque et le pied de l'aube.

Par ailleurs, il existe un jeu radial significatif entre la face interne de la plateforme et le sommet des dents du disque, ce qui est susceptible de générer des fuites importantes US3047268 montre les caractéristiques techniques du préambule de la revendication indépendante 1.

### EXPOSÉ DE L'INVENTION

L'invention vise à résoudre au moins partiellement les problèmes rencontrés dans les solutions de l'art antérieur.

A cet égard, l'invention a pour objet une aube mobile de turbomachine, comprenant :
un pied configuré pour s'insérer dans un logement de disque de rotor pour turbomachine,
une plateforme portée par le pied, la plateforme comprenant un rebord amont,
une pale s'étendant depuis la plateforme.

Selon l'invention, le rebord amont comprend un ergot destiné à engager une entaille de blocage du disque, de sorte à retenir l'aube relativement au disque axialement selon la direction longitudinale du logement.

L'entaille de blocage et l'ergot favorisent un montage de l'aube mobile relativement au disque selon l'orientation souhaitable du bord d'attaque et du bord de fuite en matière aérodynamique. En cas de tentative de montage de l'aube mobile selon l'orientation inverse, l'ergot vient en butée sur le sommet de la dent du disque de rotor.

L'entaille de blocage et l'ergot assurent simultanément la fonction de facilité de montage mentionnée ci-dessus, et une fonction de retenue axiale de l'aube relativement au disque selon la direction longitudinale.

Par ailleurs, la coopération de l'entaille de blocage et de l'ergot permet de rapprocher la dent du disque de la plateforme de l'aube. La hauteur d'échasse est réduite, ce qui procure une plus grande compacité de l'aube à pale identique. Les contraintes mécaniques exercées dans la dent du disque portant l'aube et dans le pied d'aube sont diminuées, ce qui permet de diminuer la masse de l'aube, et par conséquent aussi la masse du disque portant l'aube et assurant la rétention centrifuge de l'aube.

La coopération de l'entaille de blocage et de la dent du disque permet également de réduire la section de fuite entre deux aubes voisines.

De plus, la coopération de l'entaille de blocage et de l'ergot diminue le jeu radial entre la plateforme et le sommet de la dent du disque, ce qui limite encore les fuites d'air entre le disque et la plateforme.

Par direction longitudinale du logement, on entend notamment la plus grande longueur du logement. En particulier, la direction longitudinale du logement est définie par opposition à la hauteur du logement.

L'invention peut comporter de manière facultative une ou plusieurs des caractéristiques suivantes combinées entre elles ou non.

Avantageusement, le rebord amont présente sensiblement, dans au moins une coupe longitudinale à travers l'aube, une forme générale de U s'ouvrant vers l'aval. L'ergot forme préférablement une des branches de la forme générale de U et le becquet amont fait par exemple saillie vers l'amont depuis le fond de la forme générale de U.

L'invention porte également sur un disque pour compresseur ou turbine de turbomachine. Le disque comprend un logement dans lequel un pied d'une aube telle que définie ci-dessus est configuré pour s'insérer.

Selon l'invention, le disque comprend au moins une entaille de blocage destinée à être engagée par l'ergot, de sorte à retenir l'aube relativement au disque axialement selon la direction longitudinale du logement.

Selon une forme de réalisation avantageuse, la direction longitudinale du logement est sensiblement orthogonale à une direction radiale du disque.

Selon une autre forme de réalisation avantageuse, la direction longitudinale du logement est sensiblement orthogonale localement à la direction circonférentielle du disque.

L'entaille de blocage est de préférence une rainure s'étendant sensiblement selon la direction circonférentielle du disque.

Selon une autre particularité de réalisation, le logement s'étend entre deux dents consécutives du disque, l'entaille de blocage étant située sur une seule de ces deux dents.

L'invention se rapporte aussi à une roue de rotor comprenant un disque tel que défini ci-dessus et une aube mobile telle que définie ci-dessus, l'aube mobile étant destinée à être montée sur le disque, de sorte que la plateforme soit en appui sur une seule dent et que l'ergot engage l'entaille de blocage de la dent.

La roue de rotor forme alors un système isostatique. Par opposition, si au moins une des aubes mobiles de la roue était en appui sur plusieurs dents, la roue de rotor serait un système hyperstatique.

L'invention porte en outre sur un module de turbomachine choisi parmi une turbine et un compresseur, le module comprenant une roue de rotor. Le compresseur est notamment un compresseur haute ou basse pression pour turbomachine. La turbine est notamment une turbine haute ou basse pression pour turbomachine.

Enfin, l'invention concerne une turbomachine comprenant un module tel que défini ci-dessus.

### BRÈVE DESCRIPTION DES DESSINS

La présente invention sera mieux comprise à la lecture de la description d'exemples et des modes de réalisation, donnés à titre purement indicatif et nullement limitatif, en faisant référence aux dessins annexés sur lesquels :
- la figure 1 représente une vue schématique en coupe longitudinale d'une turbomachine à double flux, selon un mode de réalisation préféré de l'invention ;
- la figure 2 est une représentation schématique partielle d'une turbine basse pression de la turbomachine représentée à la figure 1 ;
- la figure 3 est une vue avant schématique partielle et en perspective d'une aube de rotor et du disque sur laquelle l'aube est montée, faisant partie de la turbine haute pression de la turbomachine de la figure 1;
- la figure 4 est une vue arrière schématique partielle et en perspective de l'aube et du disque représentés à la figure 3.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

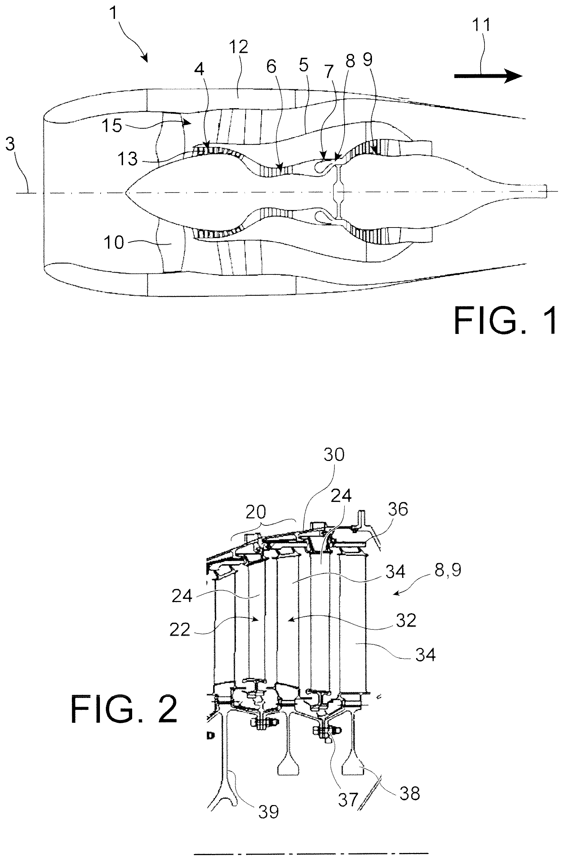

La figure 1 représente une turbomachine à double flux 1 annulaire autour d'un axe 3 de turbomachine.

La turbomachine 1 comporte, de l'amont vers l'aval, un compresseur basse pression 4, un compresseur haute pression 6, une chambre de combustion 7, une turbine haute pression 8 et une turbine basse pression 9. Ces éléments sont entourés par un carter 5. Ils définissent en commun en relation avec le carter 5 une veine primaire traversée par un flux primaire 13 s'écoulant dans la direction de l'amont vers l'aval, représentée par la flèche 11. Cette direction 11 correspond également à la force de poussée de la turbomachine en fonctionnement.

La turbine haute pression 8 forme, avec la chambre de combustion 7 et le compresseur haute pression 6 dont elle est solidaire, un corps haute pression. La turbine basse pression 9 est solidaire du compresseur basse pression 4 et de la soufflante 10, de manière à former un corps basse pression. Chaque turbine 8, 9 entraîne le compresseur associé 4, 6 en rotation autour de l'axe de la turbomachine 3 sous l'effet de la poussée des gaz provenant de la chambre de combustion 7.

La turbomachine 1 est à double flux. Par conséquent, elle comprend de plus une soufflante 10 carénée par une nacelle 12 pour générer un flux secondaire 15 à travers une veine secondaire entourant le flux primaire 13.

En référence à la figure 2, les turbines 8, 9 comprennent une pluralité d'étages 20 d'aubes entourées par le carter 30. Chaque étage 20 comporte un distributeur 22 formé d'une rangée annulaire d'aubes fixes 24, et une roue 32 d'aubes mobiles 34.

Les roues 32 de rotor sont en rotation à l'intérieur d'anneaux 36 de turbine fixés au carter 30 de turbine. Les aubes 24 de distributeur sont également portées par le carter 30. Les roues 32 de rotor comprennent des disques 38 reliés mécaniquement les uns aux autres par des brides annulaires de fixation 37. Ces brides de fixations 37 relient mécaniquement les roues 32 de rotor à un arbre tournant (non représenté) de turbomachine par l'intermédiaire d'un cône d'entrainement 39. Les disques 38 des roues 32 de rotor portent des aubes radiales 34.

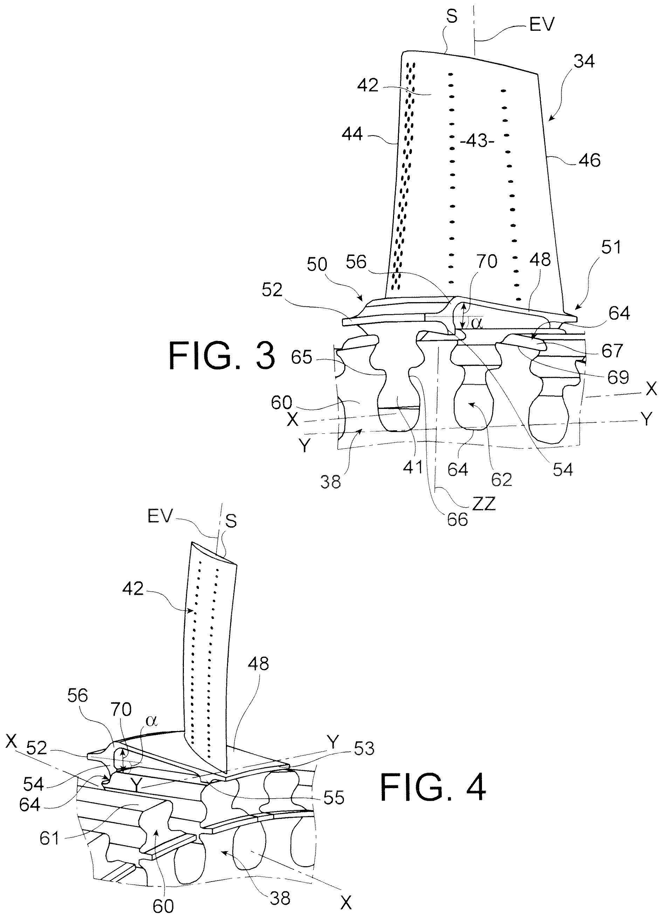

L'aube mobile 34 représentée à la figure 3 est une aube de turbine haute pression 8, selon un mode de réalisation préféré. Une telle aube mobile 34 comprend un pied 41, une pale 42 et une plateforme 48 portée par le pied 41. Le pied 41 est destiné à s'insérer dans un des logements 62 d'un disque 38 de rotor de turbine telle que celle représentée à la figure 2, ou dans un disque de rotor de compresseur 4, 6 de la turbomachine représentée à la figure 1.

En référence aux figures 3 et 4, le disque de rotor 38 comporte une pluralité de dents 60 espacées le long de la circonférence du disque 38 par des logements 62 dans chacun desquels est reçu le pied 41 d'aube mobile 34. A ce titre, il convient de noter que le disque 38 porte plusieurs aubes mobiles 34, même si les figures 3 et 4 ne représentent qu'une aube mobile 34.

Les logements 62 sont en forme d'alvéoles allongées et traversantes de part et d'autre du disque 38. Ces alvéoles sont de formes au moins partiellement complémentaire de celle du pied 41. La forme des logements 62 est choisie de sorte à pouvoir assurer la rétention des aubes 34 qui sont soumises à un effort centrifuge important lors du fonctionnement de la turbomachine 1.

Ces logements 62 se situent entre des dents 60 consécutives du disque 38. Ils s'étendent à la fois selon une direction longitudinale XX et selon la direction radiale ZZ du disque correspondant à la direction de la hauteur des dents 60. La direction longitudinale XX est sensiblement orthogonale à la direction radiale ZZ. Par ailleurs, la direction longitudinale XX est préférablement sensiblement orthogonale à la direction YY circonférentielle du disque 38, au niveau des dents 60 délimitant le logement 62.

Ces logements 62 sont chacun délimités par un fond 64 situé à distance du pied 41 et par deux surfaces opposées 65, 66 présentes chacune sur une des deux dents consécutives délimitant le logement 62. Le pied 41 vient en appui sur les deux surfaces opposées 65, 66.

En outre, les dents 60 du disque 38 comprennent chacune une entaille de blocage 64 destinée à coopérer avec l'ergot 54 de la plateforme 48, pour retenir l'aube mobile 34 relativement au disque 38 selon la direction longitudinale XX. Chaque entaille de blocage 64 ne coopère qu'avec un ergot 54 et chaque ergot 54 ne pénètre à l'intérieur que d'une entaille de blocage 64. La roue 32 de rotor, comprenant les aubes mobiles 34 et le disque 38, forme alors un système isostatique.

L'entaille de blocage 64 et l'ergot 54 sont situés uniquement en amont de l'aube mobile 34. La rétention axiale de l'aube mobile 34 selon la direction longitudinale XX en amont de l'aube 34 est assurée par une pièce rapportée (non représentée).

L'entaille de blocage 64 est une rainure qui s'étend selon la direction circonférentielle YY du disque. Elle est par exemple creusée dans la dent 60, de manière à être délimitée par une première paroi 67 et une deuxième paroi 69 qui peuvent être sensiblement orthogonales entre elles. En variante, la première paroi 67 peut avoir une inclinaison différente relativement à la deuxième paroi 69.

L'aube mobile 34 est en appui sur le disque 38, lors du fonctionnement de la turbomachine 1, seulement au niveau de l'entaille de blocage 64 et du logement 62 dont le pied 41 épouse au moins partiellement la forme.

La pale 42 s'étend depuis la plateforme 48 selon une direction d'envergure EV en se terminant par un sommet S. Cette direction d'envergure EV correspond sensiblement à la direction radiale ZZ du disque 38 et à la direction radiale de la turbomachine 1. Elle est sensiblement orthogonale à l'axe 3 de turbomachine.

La pale 42 comprend un bord d'attaque 44 et un bord de fuite 46.

Le bord d'attaque 44 est situé au niveau de l'amont de l'aube et présente généralement une forme bombée. Le bord de fuite 46 est orienté à peu près parallèlement au bord d'attaque 44 en aval de la pale 42. Le bord de fuite 46 présente généralement une forme plus effilée que le bord d'attaque 44.

Le bord d'attaque 44 et le bord de fuite 46 sont réunis latéralement par une paroi d'intrados 43 et une paroi d'extrados (non représentée) opposée à la paroi d'intrados 43.

La plateforme 48 est configurée pour être en appui sur le disque 38 de rotor. L'amont de la plateforme 48 comprend un rebord amont 50. L'aval de la plateforme 48 comprend un rebord aval 51. La plateforme 48 est en appui sur une des dents 60 du disque 38 au niveau du rebord amont 50, et présente un jeu radial faible par rapport aux dents 60 du disque 38 au niveau du rebord amont 50 et du rebord aval 51.

Le rebord amont 50 et le rebord aval 51 jouent également le rôle de raidisseurs de l'aube 34, en ce qu'ils permettent de limiter les déformations mécaniques de l'aube 34 lors du fonctionnement de la turbomachine 1.

Le rebord amont 50 comprend un becquet amont 52, un ergot 54 et une portion de raccordement 56 assurant la jonction entre le rebord amont 50 et le reste de la plateforme 48. Le rebord amont 50 présente sensiblement, dans un plan de coupe longitudinale de l'aube 34 passant par la direction d'envergure EV et la direction longitudinale XX, une forme générale de U s'ouvrant vers l'aval. La portion de raccordement 56 et l'ergot 54 forment les deux branches de la forme générale de U. Le becquet amont 52 prolonge vers l'amont le fond de la forme générale de U qui réunit la portion de raccordement 56 et l'ergot 54.

Le becquet amont 52 vise à améliorer les performances aérodynamiques de l'aube mobile 34, en amenant l'air à proximité de l'amont de la plateforme 48 vers le bord d'attaque 44. Ce becquet amont 52 assure également une fonction de recouvrement avec le distributeur 22 situé en amont de l'aube 34.

Le rebord aval 51 comporte un becquet aval 53 et une portion en saillie aval 55 qui forme le raidisseur aval. Le becquet aval 53 prolonge la veine primaire et assure une fonction de recouvrement.

L'ergot 54 est en saillie de la plateforme 48 vers le disque 38 de rotor et vers l'aval de l'aube mobile 34. Il est conçu pour engager l'entaille de blocage 64 du disque 38, de sorte que l'ergot 54 et l'entaille de blocage 64 retiennent l'aube mobile 34 selon la direction longitudinale XX.

L'ergot 54 n'est présent que sur un des côtés du rebord amont 50. Autrement dit, l'ergot 54 rend l'aube mobile 34 dissymétrique par rapport à un plan de coupe passant par un plan médian de l'aube mobile 34 comprenant la direction d'envergure EV et la direction longitudinale XX. Chaque aube mobile 34 comprend un seul ergot 54 configuré pour coopérer avec l'entaille de blocage 64 d'une des dents 60.

En fonctionnement, le flux primaire s'écoule le long de l'aube mobile 34 depuis le bord d'attaque 44 vers le bord de fuite 46 en longeant l'intrados 43 et l'extrados.

La coopération de l'entaille de blocage 64 et de l'ergot 54 permet d'assurer un montage correct de l'aube mobile 34 sur le disque 38. En effet, en cas de tentative de montage en sens inverse, c'est-à-dire en inversant le bord d'attaque 44 et le bord de fuite 46 de l'aube mobile 34 par rapport au disque 38 de rotor, l'ergot 54 viendrait en butée sur le sommet 61 de la dent, ce qui empêcherait une l'insertion de l'aube mobile 34 dans son logement 62.

L'entaille de blocage 64 et l'ergot 54 abaissent le point d'appui amont de l'aube mobile 34 sur le disque 38, ce qui se traduit par une hauteur d'échasse 70 limitée. Par conséquent, la masse et la taille à la fois du pied 41 et de la plateforme 48 sont abaissées par rapport à une technologie classique. Il en résulte une masse globale des aubes mobiles 42 plus faible, et par répercussion une masse des disques 38 plus faible que dans une technologie classique.

Enfin, le jeu radial 70 entre le milieu de la plateforme 48 selon la direction longitudinale XX et le sommet 61 de la dent 60 est plus faible que dans une turbomachine classique. Il en découle une diminution des fuites d'air.

En conclusion, la coopération entre l'entaille de blocage 64 et l'ergot 54 est susceptible d'assurer à la fois une plus grande compacité de la roue de rotor 32 à longueur de pale 42 identique, de réduire la masse de la roue de rotor 32, de limiter les fuites d'air entre le disque 38 et les aubes mobiles 34, et de favoriser le montage des aubes mobiles 34 sur le disque 38 de rotor sans inverser le sens de montage de l'aube mobile 34 relativement au disque 38.

Bien entendu, diverses modifications peuvent être apportées par l'homme du métier à l'invention qui vient d'être décrite sans sortir du cadre de l'invention telle que définie dans les revendications.

## Revendications

1. Aube mobile (34) de turbomachine (1), comprenant :
un pied (41) configuré pour s'insérer dans un logement (62) de disque (38) de rotor pour turbomachine,
une plateforme (48) portée par le pied (41), la plateforme (48) comprenant un rebord amont (50),
une pale (42) s'étendant depuis la plateforme (48),
**caractérisée en ce que** le rebord amont (50) comprend un ergot (54) destiné à engager une entaille de blocage (64) du disque (38), de sorte à retenir l'aube (34) relativement au disque (38) axialement vers l'aval selon la direction longitudinale (XX) du logement (62).

2. Disque (38) pour compresseur (4, 6) ou turbine (8, 9) de turbomachine, le disque (38) comprenant un logement (62) dans lequel un pied (41) d'une aube (34) selon la revendication 1 est configuré pour s'insérer,
**caractérisé en ce que** le disque (38) comprend au moins une entaille de blocage (64) destinée à être engagée par l'ergot (54), de sorte à retenir l'aube (34) relativement au disque (38) axialement vers l'aval selon la direction longitudinale (XX) du logement (62).

3. Disque (38) selon la revendication précédente, dans lequel la direction longitudinale (XX) est sensiblement orthogonale à la direction radiale (ZZ) du disque (38).

4. Disque (38) selon la revendication 2 ou la revendication 3, dans lequel la direction longitudinale (XX) est sensiblement orthogonale à une direction (YY) circonférentielle du disque (38).

5. Disque (38) selon l'une quelconque des revendications 2 à 4, dans lequel l'entaille de blocage (64) est une rainure s'étendant sensiblement selon la direction circonférentielle (YY) du disque.

6. Disque (38) selon l'une quelconque des revendications 2 à 5, dans lequel le logement (62) s'étend entre deux dents (60) consécutives du disque (38), l'entaille de blocage (64) étant située sur une seule des deux dents (60).

7. Roue (32) de rotor comprenant un disque (38) selon l'une quelconque des revendications 2 à 6, et une aube mobile (34) selon la revendication 1, l'aube (34) étant destinée à être montée sur le disque (38), de sorte que la plateforme (48) soit en appui sur une seule dent (60) et que l'ergot (54) engage l'entaille de blocage (64) de la dent (60).

8. Module de turbomachine (1) choisi parmi une turbine (8, 9) et un compresseur (4, 6), le module comprenant une roue (32) de rotor selon la revendication précédente.

9. Turbomachine (1) comprenant un module selon la revendication précédente.

## Patentansprüche

1. Laufschaufel (34) einer Turbomaschine (1), mit:
einem Fuß (41), der dazu ausgelegt ist, sich in eine Aufnahme (62) einer Rotorscheibe (38) für die Turbomaschine einzufügen,
einer von dem Fuß (41) getragenen Plattform (48), wobei die Plattform (48) einen vorgelagerten Rand (50) aufweist,
einem Schaufelblatt (42), das sich von der Plattform (48) aus erstreckt,
**dadurch gekennzeichnet, dass** der vorgelagerte Rand (50) einen Flansch (54) aufweist, der an einer Sperrkerbe (64) der Scheibe (38) derart anliegt, dass er die Schaufel (34) bezüglich der Scheibe (38) axial stromabwärts in der Längsrichtung (XX) der Aufnahme (62) festhält.

2. Scheibe (38) für einen Kompressor (4, 6) oder eine Turbine (8, 9) der Turbomaschine, wobei die Scheibe (38) eine Aufnahme (62) aufweist, in die sich ein Fuß (41) einer Schaufel (34) nach Anspruch 1 einfügen soll,
**dadurch gekennzeichnet, dass** die Scheibe (38) mindestens eine Sperrkerbe (64) aufweist, die durch den Flansch (54) derart in Anlage kommen soll, dass sie die Schaufel (34) bezüglich der Scheibe (38) axial stromabwärts in der Längsrichtung (XX) der Aufnahme (62) festhält.

3. Scheibe (38) nach dem vorhergehenden Anspruch, wobei die Längsrichtung (XX) im Wesentlichen orthogonal zur radialen Richtung (ZZ) der Scheibe (38) verläuft.

4. Scheibe (38) nach Anspruch 2 oder Anspruch 3, wobei die Längsrichtung (XX) im Wesentlichen orthogonal zu einer Umfangsrichtung (YY) der Scheibe (38) verläuft.

5. Scheibe (38) nach einem der Ansprüche 2 bis 4, wobei die Sperrkerbe (64) eine im Wesentlichen in der Umfangsrichtung (YY) der Scheibe verlaufende Nut ist.

6. Scheibe (38) nach einem der Ansprüche 2 bis 5, wobei die Aufnahme (62) zwischen zwei aufeinanderfolgenden Zähnen (60) der Scheibe (38) verläuft, wobei die Sperrkerbe (64) auf einem einzigen der beiden Zähne (60) liegt.

7. Rad (32) des Rotors mit einer Scheibe (38) nach einem der Ansprüche 2 bis 6, und Laufschaufel (34) nach Anspruch 1, wobei die Schaufel (34) derart auf der Scheibe (38) montiert werden soll, dass sich die Plattform (48) auf einem einzigen Zahn (60) abstützt und dass der Flansch (54) an der Sperrkerbe (64) des Zahns (60) anliegt.

8. Modul der Turbomaschine (1), ausgewählt aus einer Turbine (8, 9) und einem Kompressor (4, 6), wobei das Modul ein Rad (32) des Rotors nach dem vorhergehenden Anspruch aufweist.

9. Turbomaschine (1) mit einem Modul nach dem vorhergehenden Anspruch.

## Claims

1. A mobile vane (34) of a turbomachine (1), comprising:
a root (41) configured to be inserted in a housing (62) of a rotor disk (38) for a turbomachine,
a platform (48) carried by the root (41), the platform (48) comprising an upstream rim (50),
a blade (42) extending from the platform (48),
**characterised in that** the upstream rim (50) comprises a lug (54) for engaging a locking notch (64) of the disk (38), so as to retain the vane (34) relative to the disk (38) axially downstream along the longitudinal direction (XX) of the housing (62).

2. A disk (38) for a compressor (4, 6) or turbine (8, 9) of a turbomachine, the disk (38) comprising a housing (62) in which a root (41) of a vane (34) according to claim 1 is configured to be inserted,
**characterised in that** the disk (38) comprises at least one locking notch (64) for being engaged with the lug (54), so as to retain the vane (34) relative to the disk (38) axially downstream along the longitudinal direction (XX) of the housing (62).

3. The disk (38) according to the preceding claim, wherein the longitudinal direction (XX) is substantially orthogonal to the radial direction (ZZ) of the disk (38).

4. The disk (38) according to claim 2 or claim 3, wherein the longitudinal direction (XX) is substantially orthogonal to a circumferential direction (YY) of the disk (38).

5. The disk (38) according to any of claims 2 to 4, wherein the locking notch (64) is a groove substantially extending along the circumferential direction (YY) of the disk.

6. The disk (38) according to any of claims 2 to 5, wherein the housing (62) extends between two consecutive teeth (60) of the disk (38), the locking notch (64) being located on only one of both teeth (60).

7. A rotor wheel (32) comprising a disk (38) according to any of claims 2 to 6, and a mobile vane (34) according to claim 1, the vane (34) for being mounted to the disk (38), such that the platform (48) presses against only one tooth (60) and that the lug (54) engages the locking notch (64) of the tooth (60).

8. A turbomachine module (1) chosen from a turbine (8, 9) and a compressor (4, 6), the module comprising a rotor wheel (32) according to the preceding claim.

9. A turbomachine (1) comprising a module according to the preceding claim.
